# EUROPEAN PATENT APPLICATION

(11) **EP 4 845 277 A1**
(43) Date of publication of application: **25.11.2026**
(21) Application number: 24921806.6
(22) Date of filing: 25.12.2024
(51) Int. Cl.: H04W 72/23, H04W 72/04

(54) **COMMUNICATION METHOD AND APPARATUS**

(30) Priority: 04.02.2024 CN 202410169174
(71) Applicant: Huawei Technologies Co., Ltd., Shenzhen, Guangdong 518129 (CN)
(72) Inventor: LUO, Zhihu, Shenzhen, Guangdong 518129 (CN)
(74) Representative: Huawei European IPR
(86) International application number: PCT/CN2024/142507
(87) International publication number: WO 2025/161784

(57) **Abstract**

This application provides a communication method and apparatus, to resolve a problem that communication performance of a downlink control channel for a narrowband terminal device is poor. To improve an aggregation level of the PDCCH for the narrowband terminal device, in this application, a limitation on a quantity of time domain resources in a control resource set for the narrowband terminal device is overcome, to be specific, the time domain resources are not constrained by three symbols. Therefore, a quantity of CCEs included in the control resource set for the narrowband terminal device can be increased by increasing the quantity of time domain resources in the control resource set for the narrowband terminal device, to improve an aggregation level of a downlink control channel in the control resource set for the narrowband terminal device.

## Description

### CROSS-REFERENCE TO RELATED APPLICATIONS

This application claims priority to Chinese Patent Application No. 202410169174.4, filed with the China National Intellectual Property Administration on February 4, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Machine-type terminal devices generally have higher requirements on costs and power consumption. An implementation of reducing costs of a terminal device is to reduce its bandwidth capability. A terminal device whose bandwidth capability is reduced may be referred to as a narrowband terminal device.

Because the bandwidth capability of the narrowband terminal device is low, a control channel element (control channel element, CCE) aggregation level supported by a physical downlink control channel (physical downlink control channel, PDCCH) for the narrowband terminal device is low. As a result, a PDCCH coverage capability of the narrowband terminal device is low.

### SUMMARY

This application provides a communication method and apparatus, to resolve a problem that communication performance of a downlink control channel for a narrowband terminal device is poor.

According to a first aspect, a communication method is provided. The method may be performed by a terminal device or a chip, a chip system, or a circuit used in the terminal device. The method may be implemented by using the following steps: monitoring a downlink control channel in a first control resource set, and receiving downlink data or sending uplink data based on the downlink control channel. The first control resource set occupies N symbols in time domain, where N is an integer greater than 3.

In this application, a quantity of time domain resources in the first control resource set is increased to increase a quantity of CCEs included in the first control resource set, thereby improving an aggregation level of the downlink control channel in the first control resource set. For example, it is assumed that n=3, and the first control resource set occupies six RBs in terms of frequency domain resources, that is, M=6. If N is less than or equal to 3, a highest CCE aggregation level supported by the first control resource set is 2 or 3. In this application, N is greater than 3. For example, N=6. In this case, the highest CCE aggregation level supported by the first control resource set is 6. It can be learned that, according to the method provided in this application, the aggregation level of the downlink control channel in the first control resource set can be improved.

In a possible design, the N symbols include K subsets, and a quantity of symbols included in a first subset in the K subsets is less than or equal to 3, where K is an integer greater than 0 and less than or equal to N. In the foregoing manner, the first control resource set and a second control resource set can dynamically share an overlapping resource.

In a possible design, numbers of resource element groups corresponding to the K subsets satisfy the following rule: Resource element groups corresponding to one subset are first numbered in ascending order of time domain symbol indexes and then in ascending order of resource block indexes; and the resource element groups corresponding to the K subsets are numbered in ascending order of subset indexes. In the foregoing manner, a numbering mode in each subset is the same as a numbering mode in the second resource set, so that the first control resource set and the second control resource set can dynamically share the overlapping resource.

In a possible design, the method further includes: receiving first information, where the first information indicates the quantity N of symbols occupied by the first control resource set and the quantity K of subsets, or the first information indicates quantities, of symbols, that respectively correspond to the K subsets. In the foregoing manner, a network device and the first terminal device can align a position and a structure of the first control resource set.

In a possible design, the method further includes: receiving second information, where the second information indicates a quantity of symbols occupied by a second control resource set and a quantity of resource blocks occupied by the second control resource set, where quantities of symbols in the K subsets are determined based on the quantity of symbols occupied by the second control resource set, and the quantity K of subsets is determined based on a quantity of resource blocks occupied by the first control resource set and the quantity of resource blocks occupied by the second control resource set. In the foregoing manner, both the first control resource set and the second control resource set are configured by using one piece of information, so that information overheads can be reduced, and reliability of information transmission performance can be improved.

In a possible design, the quantities of symbols in the K subsets are equal to the quantity of symbols occupied by the second control resource set. According to the foregoing design, the first control resource set and the second control resource set can dynamically share the overlapping resource.

In a possible design, the quantity K of $subsets = \left⌊\frac{N 1}{N 2}\right⌋$, or $K = \left⌈\frac{N 1}{N 2}\right⌉$, where *N*1 is the quantity of resource blocks occupied by the second control resource set, *N*2 is the quantity of resource blocks occupied by the first control resource set, └ ┘ represents a floor function, and ┌ ┐ represents a ceiling function.

In a possible design, the second information is carried in system information.

In a possible design, the system information is a master information block.

In a possible design, the method further includes: receiving third information, where the third information includes a first bitmap, the first bitmap is associated with a quantity P of symbols, and the first bitmap indicates a time domain position of a subset whose quantity of symbols is P in the K subsets. In the foregoing manner, a network device and the first terminal device can align a position and a structure of the first control resource set.

In a possible design, a bit whose value is a first value in the first bitmap indicates a position of a symbol included in the subset whose quantity of symbols is P.

In a possible design, a bit whose value is a first value in the first bitmap indicates a position of a 1^{st} symbol in the subset whose quantity of symbols is P.

In a possible design, a quantity of bits in the first bitmap is equal to a quantity of symbols included in one slot.

In a possible design, a quantity of frequency domain resources in the first control resource set is less than or equal to a preset value.

In a possible design, time-frequency resources in the first control resource set and the second control resource set overlap, and the quantity of symbols in the second control resource set is less than or equal to 3.

In a possible design, the first control resource set corresponds to a first-type terminal device, and a maximum bandwidth capability of the first-type terminal device is less than a maximum bandwidth capability of a second-type terminal device, or a maximum bandwidth capability of the first-type terminal device is less than or equal to a preset value.

According to a second aspect, a communication method is provided. The method may be performed by a network device or a chip, a chip system, or a circuit used in the network device. The method may be implemented by using the following steps: sending a first downlink control channel in a first control resource set, and sending downlink data or receiving uplink data based on the first downlink control channel. The first control resource set occupies N symbols in time domain, where N is an integer greater than 3.

In this application, a quantity of time domain resources in the first control resource set is increased to increase a quantity of CCEs included in the first control resource set, thereby improving an aggregation level of the downlink control channel in the first control resource set. For example, it is assumed that n=3, and the first control resource set occupies six RBs in terms of frequency domain resources, that is, M=6. If N is less than or equal to 3, a highest CCE aggregation level supported by the first control resource set is 2 or 3. In this application, N is greater than 3. For example, N=6. In this case, a highest CCE aggregation level supported by the first control resource set is 6. It can be learned that, according to the method provided in this application, the aggregation level of the downlink control channel in the first control resource set can be improved.

In a possible design, the N symbols include K subsets, and a quantity of symbols included in a first subset in the K subsets is less than or equal to 3, where K is an integer greater than 0 and less than or equal to N. In the foregoing manner, the first control resource set and a second control resource set can dynamically share an overlapping resource.

In a possible design, numbers of resource element groups corresponding to the K subsets satisfy the following rule: Resource element groups corresponding to one subset are first numbered in ascending order of time domain symbol indexes and then in ascending order of resource block indexes; and the resource element groups corresponding to the K subsets are numbered in ascending order of subset indexes. In the foregoing manner, a numbering mode in each subset is the same as a numbering mode in the second resource set, so that the first control resource set and the second control resource set can dynamically share the overlapping resource.

In a possible design, the method further includes: sending first information, where the first information indicates the quantity N of symbols occupied by the first control resource set and the quantity K of subsets, or the first information indicates quantities, of symbols, that respectively correspond to the K subsets. In the foregoing manner, the network device and a first terminal device can align a position and a structure of the first control resource set.

In a possible design, the method further includes: sending second information, where the second information indicates a quantity of symbols occupied by a second control resource set and a quantity of resource blocks occupied by the second control resource set, where quantities of symbols in the K subsets are determined based on the quantity of symbols occupied by the second control resource set, and the quantity K of subsets is determined based on a quantity of RBs occupied by the first control resource set and the quantity of resource blocks occupied by the second control resource set. In the foregoing manner, both the first control resource set and the second control resource set are configured by using one piece of information, so that information overheads can be reduced, and reliability of information transmission performance can be improved.

In a possible design, the quantities of symbols in the K subsets are equal to the quantity of symbols occupied by the second control resource set. According to the foregoing design, the first control resource set and the second control resource set can dynamically share the overlapping resource.

In a possible design, the quantity K of $subsets = \left⌊\frac{N 1}{N 2}\right⌋$, or $K = \left⌈\frac{N 1}{N 2}\right⌉$, where *N*1 is the quantity of resource blocks occupied by the second control resource set, *N*2 is the quantity of resource blocks occupied by the first control resource set, └ ┘ represents a floor function, and ┌ ┐ represents a ceiling function.

In a possible design, the second information is carried in system information.

In a possible design, the system information is a master information block.

In a possible design, the method further includes: sending third information, where the third information includes a first bitmap, the first bitmap is associated with a quantity P of symbols, and the first bitmap indicates a time domain position of a subset whose quantity of symbols is P in the K subsets. In the foregoing manner, the network device and a first terminal device can align a position and a structure of the first control resource set.

In a possible design, a bit whose value is a first value in the first bitmap indicates a position of a symbol included in the subset whose quantity of symbols is P.

In a possible design, a bit whose value is a first value in the first bitmap indicates a position of a 1^{st} symbol in the subset whose quantity of symbols is P.

In a possible design, a quantity of bits in the first bitmap is equal to a quantity of symbols included in one slot.

In a possible design, a quantity of frequency domain resources in the first control resource set is less than or equal to a preset value.

In a possible design, time-frequency resources in the first control resource set and the second control resource set overlap, and the quantity of symbols in the second control resource set is less than or equal to 3.

In a possible design, the first control resource set corresponds to a first-type terminal device, and a maximum bandwidth capability of the first-type terminal device is less than a maximum bandwidth capability of a second-type terminal device, or a maximum bandwidth capability of the first-type terminal device is less than or equal to a preset value.

In a possible design, the method further includes: sending a second downlink control channel in the second control resource set; and sending downlink data or receiving uplink data based on the second downlink control channel, where the quantity of symbols in the second control resource set is less than or equal to 3, and the time-frequency resources in the first control resource set and the second control resource set overlap.

According to a third aspect, this application further provides a communication apparatus. The apparatus is a terminal device or a chip in the terminal device. The communication apparatus has a function of implementing any method provided in the first aspect. The communication apparatus may be implemented by hardware, or may be implemented by hardware executing corresponding software. The hardware or the software includes one or more units or modules corresponding to the foregoing function.

In a possible design, the communication apparatus includes a processor. The processor is configured to support the communication apparatus to perform a corresponding function of the terminal device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication, for example, data or signal receiving and sending, between the communication apparatus and a service network device or another device. For example, the communication interface may be a transceiver, a circuit, a bus, a module, or a communication interface of another type.

In a possible design, the communication apparatus includes corresponding functional modules respectively configured to implement the steps in the foregoing methods. The function may be implemented by hardware, or may be implemented by hardware executing corresponding software. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the first aspect, and the details are not described herein.

According to a fourth aspect, this application further provides a communication apparatus. The apparatus is a network device or a chip in the network device. The communication apparatus has a function of implementing any method provided in the second aspect. The communication apparatus may be implemented by hardware, or may be implemented by hardware executing corresponding software. The hardware or the software includes one or more units or modules corresponding to the foregoing function.

In a possible design, the communication apparatus includes a processor. The processor is configured to support the communication apparatus to perform a corresponding function of the network device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication, for example, data or signal receiving and sending, between the communication apparatus and a terminal device or another device. For example, the communication interface may be a transceiver, a circuit, a bus, a module, or a communication interface of another type.

In a possible design, the communication apparatus includes corresponding functional modules respectively configured to implement the steps in the foregoing methods. The function may be implemented by hardware, or may be implemented by hardware executing corresponding software. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the second aspect, and the details are not described herein.

According to a fifth aspect, a communication apparatus is provided. The communication apparatus includes a processor and an interface circuit. The interface circuit is configured to: receive a signal from a communication apparatus other than the communication apparatus, and transmit the signal to the processor; or send a signal from the processor to a communication apparatus other than the communication apparatus. The processor is configured to implement the method in any one of the first aspect and the possible designs by using a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus, and transmit the signal to the processor; or send a signal from the processor to a communication apparatus other than the communication apparatus. The processor is configured to implement the method in any one of the second aspect and the possible designs by using a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect or the second aspect and the possible designs is implemented.

According to an eighth aspect, a computer program product storing instructions is provided. When the instructions are run by a processor, the method in any one of the first aspect or the second aspect and the possible designs is implemented.

According to a ninth aspect, a chip system is provided. The chip system includes a processor, and may further include a memory. The chip system is configured to implement the method in any one of the first aspect or the second aspect and the possible designs. The chip system may include a chip, or may include a chip and another discrete component.

According to a tenth aspect, a communication system is provided. The system includes the apparatus (for example, the first terminal device) according to the first aspect and the apparatus (for example, the network device) according to the second aspect. The communication system may further include another terminal apparatus (for example, a second terminal device) in the second aspect.

For technical effects that can be achieved by the technical solution in any one of the third aspect to the tenth aspect, refer to the descriptions of the technical effects that can be achieved by the technical solution in the first aspect. Repeated parts are not described again.

### BRIEF DESCRIPTION OF DRAWINGS

FIG. 1 is a diagram of REG numbers in a CORESET according to an embodiment of this application;
FIG. 2 is a diagram of an aggregation level of a PDCCH for a narrowband terminal device according to an embodiment of this application;
FIG. 3 is another diagram of an aggregation level of a PDCCH for a narrowband terminal device according to an embodiment of this application;
FIG. 4 is a diagram of an architecture of a communication system according to an embodiment of this application;
FIG. 5 is a diagram of connection between a network device and a terminal device according to an embodiment of this application;
FIG. 6 is a schematic flowchart of a communication method according to an embodiment of this application;
FIG. 7 is a diagram of a structure of a first control resource set according to an embodiment of this application;
FIG. 8 is a diagram of another structure of a first control resource set according to an embodiment of this application;
FIG. 9 is a diagram of resource overlapping according to an embodiment of this application;
FIG. 10 is a diagram of bitmaps according to an embodiment of this application;
FIG. 11 is another diagram of bitmaps according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application for ease of understanding by a person skilled in the art.
I. A legacy UE (legacy UE) may be, for example, an enhanced mobile broadband (enhanced mobile broadband, eMBB) terminal or an ultra-reliable low-latency communication (ultra-reliable low-latency communication, URLLC) terminal. The legacy UE may also be referred to as non-reduced capability (reduced capability, RedCap) UE or the like.
II. RedCap UE may be a terminal whose capability is reduced compared with the legacy UE, for example, may be user equipment (user equipment, UE) in Release 17.

A difference between the legacy UE and the RedCap UE includes one or more of the following:
1. Bandwidth capabilities are different. A maximum bandwidth supported by the legacy UE may be greater than a maximum bandwidth supported by the RedCap UE. For example, the legacy UE may support a maximum of 100 MHz frequency domain resources simultaneously used on one carrier to communicate with a network device, and the RedCap UE may support a maximum of 20 MHz, 10 MHz, or 5 MHz frequency domain resources used on one carrier to communicate with a network device.
2. Quantities of transmit/receive antennas are different. An antenna configuration of the legacy UE may be greater than an antenna configuration of the RedCap UE. For example, a minimum antenna configuration supported by the legacy UE may be greater than a maximum antenna configuration supported by the RedCap UE. For example, the minimum antenna configuration supported by the legacy UE may have four transmit antennas and two receive antennas. To be specific, in the minimum antenna configuration, downlink signals are received by using four receive antennas, and uplink signals are sent by using two transmit antennas. The maximum antenna configuration supported by the RedCap UE may have fewer than four transmit antennas and two receive antennas. For example, the RedCap UE supports only two receive antennas and one transmit antenna, or may support two receive antennas and two transmit antennas.
3. Maximum uplink transmit power is different. Maximum uplink transmit power of the legacy UE may be greater than maximum uplink transmit power of the RedCap UE. For example, the maximum uplink transmit power of the legacy UE may be 23 dBm or 26 dBm, and the maximum uplink transmit power of the RedCap UE may be only a value from 4 dBm to 20 dBm.
4. The legacy UE and the RedCap UE correspond to different protocol releases. For example, an NR Rel-15 terminal or an NR Rel-16 terminal may be considered as legacy UE, and an NR Rel-17 terminal may be considered as RedCap UE.
5. The legacy UE and the RedCap UE support different carrier aggregation (carrier aggregation, CA) capabilities. For example, the legacy UE may support carrier aggregation, and the RedCap UE does not support carrier aggregation. For another example, both the RedCap UE and the legacy UE support carrier aggregation, but a maximum quantity of carriers that the legacy UE simultaneously supports in aggregation is greater than a maximum quantity of carriers that the RedCap UE simultaneously supports in aggregation. For example, the legacy UE may simultaneously support aggregation of a maximum of five carriers or 32 carriers, but the RedCap UE simultaneously supports aggregation of a maximum of two carriers.
6. The legacy UE and the RedCap UE have different frequency division duplex (frequency division duplex, FDD) capabilities. For example, the legacy UE may support full-duplex FDD, and the RedCap UE may support only half-duplex FDD.
7. The RedCap UE and the legacy UE have different data processing time capabilities. For example, a minimum delay between receiving downlink data by the legacy UE and sending a feedback for the downlink data by the legacy UE is less than a minimum delay between receiving downlink data by the RedCap UE and sending a feedback for the downlink data by the RedCap UE; and/or a minimum delay between sending uplink data by the legacy UE and receiving a feedback for the uplink data by the legacy UE is less than a minimum delay between sending uplink data by the RedCap UE and receiving a feedback for the uplink data by the RedCap UE.
8. The legacy UE and the RedCap UE have different processing capabilities.
9. The legacy UE and the RedCap UE correspond to different uplink and/or downlink peak transmission rates.
10. An enhanced reduced capability (enhanced reduced capability, eRedCap) UE (EREDCAP UE) supports a UE-specific radio resource control (radio resource control, RRC) (UE-specific RRC) configured downlink bandwidth part (bandwidth part, BWP) that includes a cell-defining SSB (cell-defining SSB, CD-SSB) or a non-cell-defining SSB (non-cell-defining SSB, NCD-SSB). The legacy UE supports only a UE-specific RRC configured downlink BWP that includes a CD-SSB.
11. The RedCap UE supports NCD-SSB-based measurement in an RRC configured downlink BWP.

III. The eRedCap UE may be understood as a terminal whose capability is further reduced compared with the RedCap UE. The eRedCap UE inherits most configurations of the RedCap UE, and further enhancement includes at least one of the following:
1. Uplink and downlink peak rates are 10 Mbps. In addition, for UE in Feature Group FG 48-1, v*Q*f corresponding to the peak rate=3.2. v is a quantity of multiple-input multiple-output (multiple-input multiple-output, MIMO) layers (layers), Q is a modulation order, and f is a scaling factor. For UE in Feature Group FG 48-2, when a quantity of layers is 1, v*Q*f corresponding to the peak rate=0.8; or when a quantity of layers is 2, v*Q*f corresponding to the peak rate=0.75.
2. For UE in FG 48-1, a maximum quantity, of physical resource blocks (physical resource blocks, PRBs) for uplink or downlink unicast scheduling, that is supported in a single slot (slot) or a single hop (hop) is 25 at 15 kHz or 12 at 30 kHz.
3. When a quantity of resource blocks (resource blocks, RBs) scheduled for a physical downlink shared channel (physical downlink shared channel, PDSCH) for a random access response (random access response, RAR) or a PDSCH for a message B (MsgB) exceeds 25 PRBs at 15 kHz or 12 PRBs at 30 kHz, RAR processing timing relaxation of 1/0.5 ms respectively corresponds to a subcarrier spacing (subcarrier spacing, SCS) of 15/30 kHz.

It should be noted that names of the foregoing types of terminal devices are not limited in this application.

### IV. Resource block (resource block, RB)

The RB is a frequency domain unit. For example, one RB may include ${N}_{sc}^{RB}$ consecutive subcarriers in frequency domain. ${N}_{sc}^{RB}$ is a positive integer. For example, ${N}_{sc}^{RB}$ may be equal to 12.

### V. Resource element group (resource element group, REG)

One REG may include one time domain unit, for example, one orthogonal frequency division multiplexing (orthogonal frequency division multiplexing, OFDM) symbol, in time domain, and include one frequency domain unit, for example, one RB, in frequency domain. For ease of understanding, the following provides descriptions by using an example in which one REG includes one OFDM symbol in time domain and includes one RB in frequency domain.

It should be noted that the OFDM symbol may also be referred to as a symbol.

### VI. Control channel element (control channel element, CCE)

One CCE includes M REGs. M is a positive integer. For example, M may be 6.

### VII. Downlink control channel

The downlink control channel may also be referred to as a PDCCH. The downlink control channel is one of downlink channels, and is for carrying downlink control information. Usages of the downlink control information include, but are not limited to, scheduling a physical downlink shared channel (physical downlink shared channel, PDSCH), scheduling a physical uplink shared channel (physical uplink shared channel, PUSCH), indicating a slot format, and transmitting a transmit power control (transmit power control, TPC) command, UE power saving information, and the like. A name of the downlink control channel is not limited in this application.

One PDCCH includes one or more CCEs. For example, as enumerated in Table 1, when an aggregation level of the PDCCH is 1, one PDCCH includes one CCE; when an aggregation level of the PDCCH is 2, one PDCCH includes two CCEs; or when an aggregation level of the PDCCH is 4, one PDCCH includes four CCEs. The rest can be deduced by analogy.

**Table 1**

| Aggregation Level (aggregation level) | Quantity of CCEs (number of CCEs) |
|---|---|
| 1 | 1 |
| 2 | 2 |
| 4 | 4 |
| 8 | 8 |
| 16 | 16 |

### V. Control resource set

The control resource set is for carrying a downlink control channel or downlink control information. The control resource set may be referred to as a CORESET (control resource set), may be referred to as a control resource area, or may be referred to as a control area. A name of the control resource set is not limited in this application.

One control resource set may include ${N}_{RB}^{CORESET}$ resource blocks (resource blocks, RBs) in frequency domain, and include ${N}_{symb}^{CORESET}$ symbols in time domain. For example, ${N}_{symb}^{CORESET} ∈ \left\{1, 2, 3\right\}$. Sizes and time-frequency positions of time-frequency resources occupied by the CORESET may be configured by a network device.

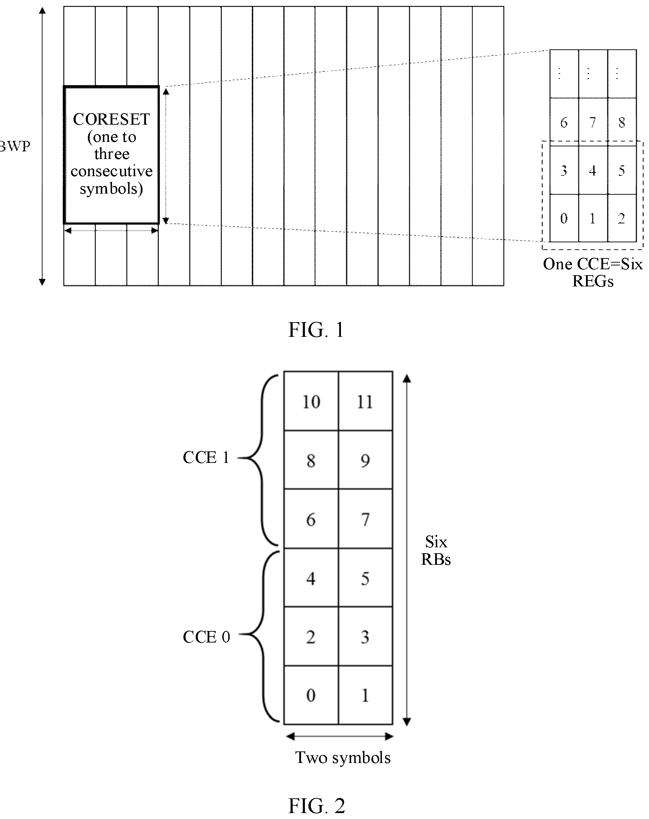

REGs in a CORESET are numbered first in ascending order of time, and are numbered starting from 0. The number 0 corresponds to a 1^{st} OFDM symbol and a resource block with a smallest number in the control resource set. Assuming that the CORESET occupies ${N}_{symb}^{CORESET} = 3$ symbols in time domain, and occupies ${N}_{RB}^{CORESET}$ RBs in frequency domain, time-frequency resources occupied by the CORESET are shown in FIG. 1. The REGs in the CORESET are numbered in time domain order. An REG numbered 0 corresponds to the 1^{st} OFDM symbol in time domain, namely, an OFDM symbol 0 in FIG. 1, and corresponds to the RB with the smallest number in frequency domain, namely, an RB 0 in FIG. 1. The numbering is in ascending order. When a CCE-to-REG mapping relationship is non-interleaved, a CCE 0 includes six REGs, namely, the REG 0, an REG 1, an REG 2, an REG 3, an REG 4, and an REG 5.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

In addition, unless otherwise stated on the contrary, ordinal terms such as "first" and "second" in embodiments of this application are for distinguishing between a plurality of objects, and are not intended to limit sizes, content, a sequence, a time sequence, priorities, importance degrees, or the like of the plurality of objects. For example, a first control resource set and a second control resource set are merely for distinguishing between different bandwidth parts, but do not indicate different sizes, priorities, importance degrees, or the like of the two bandwidth parts.

It should be noted that in this application, the words such as "example" or "for example" represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relevant concept in a specific manner.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device.

The foregoing describes some term concepts in embodiments of this application. The following describes the technical background of embodiments of this application.

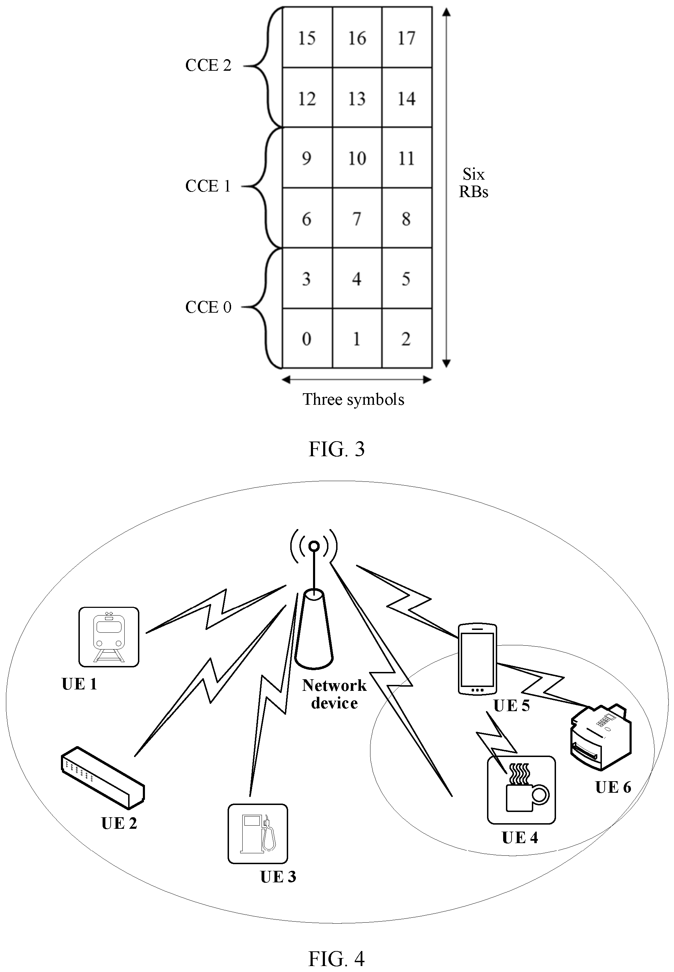

Currently, a maximum of three symbols can be configured for a CORESET for a terminal device. To support internet of things applications with low costs, a narrowband terminal device with a small bandwidth is introduced to an NR system. For the narrowband terminal device with the small bandwidth, an aggregation level supported by a PDCCH is low because a bandwidth capability is limited. For example, assuming that a maximum bandwidth capability of the narrowband terminal device corresponds to a bandwidth of six RBs, when a CORESET occupies two OFDM symbols in time domain, a highest aggregation level supported by the PDCCH for the narrowband terminal device is 2, as shown in FIG. 2. When a CORESET occupies three OFDM symbols in time domain, the PDCCH for the narrowband terminal device supports aggregation of a maximum of three CCEs, as shown in FIG. 3.

Currently, a PDCCH for a broadband terminal device supports a high aggregation level. For example, a highest supported aggregation level is 16. The narrowband terminal device supports a low aggregation level. For example, the highest supported aggregation levels shown in FIG. 2 and FIG. 3 are 2 or 3. With same control information overheads, a higher aggregation level indicates better coverage performance. Because the CCE aggregation level supported by the PDCCH for the narrowband terminal device is low, a PDCCH coverage capability of the narrowband terminal device is low.

Based on this, embodiments of this application provide a communication method and apparatus, to resolve a problem that communication performance of a downlink control channel for a narrowband terminal device is poor. The method and the apparatus are based on a same concept. Because the method and the apparatus have similar problem-resolving principles, for implementation of the apparatus and the method, refer to each other. Repeated parts are not described again.

The communication method provided in this application may be applied to various communication systems, for example, an internet of things (internet of things, IoT) communication system, a narrowband internet of things (narrowband internet of things, NB-IoT) communication system, a long term evolution (long term evolution, LTE) communication system, a 5th generation (5G) communication system, an LTE and 5G hybrid architecture, a 5G new radio (new radio, NR) system, and a 6G system or a new communication system emerging in future communication development. The 5G communication system in this application may include at least one of a non-standalone (non-standalone, NSA) 5G communication system or a standalone (standalone, SA) 5G communication system. The communication system may alternatively be a machine-to-machine (machine-to-machine, M2M) network or another network.

A network device and a terminal may communicate over a licensed spectrum (licensed spectrum), over an unlicensed spectrum (unlicensed spectrum), or over both a licensed spectrum and an unlicensed spectrum. The network device and the terminal may communicate over a spectrum below 6 GHz, over a spectrum above 6 GHz, or over both a spectrum below 6 GHz and a spectrum above 6 GHz. Spectrum resources used between the network device and the terminal are not limited in embodiments of this application.

FIG. 4 shows a communication system according to an embodiment of this application. The communication system includes a network device and a plurality of terminals. For ease of description, an example in which the communication system includes one network device and six terminals is used in FIG. 4, where the six terminals are referred to as UE 1 to UE 6 for short. In the communication system, the UE 1 to the UE 6 may send uplink data to the network device, and the network device may receive the uplink data sent by the UE 1 to the UE 6. In addition, a communication subsystem may include the UE 4 to the UE 6. The network device may send downlink information to the UE 1, the UE 2, the UE 3, and the UE 5, and the UE 5 may send the downlink information to the UE 4 and the UE 6 based on a device-to-device (device-to-device, D2D) technology. FIG. 4 is merely a diagram, and a type of the communication system and quantities, types, and the like of devices included in the communication system are not specifically limited.

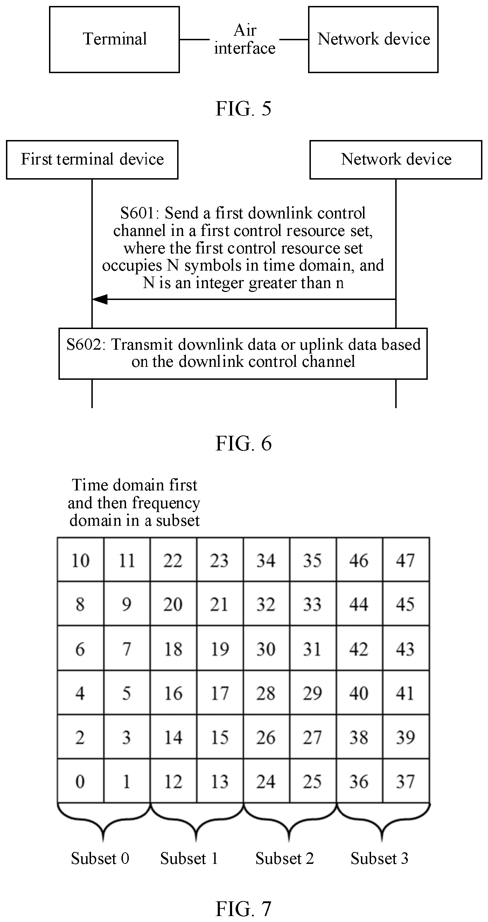

For example, the network device and the terminal may be connected through an air interface. For example, a connection relationship between the network device and the terminal may be shown in FIG. 5.

Embodiments of this application may be applied to a communication system serving a first-type terminal, and certainly may also be applied to a communication system serving a second-type terminal, or may be applied to a communication system serving both a first-type terminal and a second-type terminal. A maximum bandwidth supported by the first-type terminal device is less than a maximum bandwidth supported by the second-type terminal device. For example, the second-type terminal device may be legacy UE, and the first-type terminal device may be RedCap UE, eRedCap UE, or another narrowband terminal device, for example, a terminal device whose bandwidth is less than or equal to a preset value. For example, the preset value may be a frequency value, for example, 20 MHz, 5 MHz, or 3 MHz; or the preset value may be a quantity of resource units, for example, 25, 15, 12, or 6. The quantity of resource units is related to a subcarrier spacing, and the resource unit may be a resource block, a subcarrier, or the like.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

It should be noted that names of terms in this application such as the control resource set, the downlink control channel, the symbol, the resource element group, and the resource block are not limited in this application.

The following describes the technical solutions in embodiments of this application with reference to the accompanying drawings in embodiments of this application. For ease of description, the following uses an example in which the method is performed by a network device and a first terminal. For example, the first terminal device may be a first-type terminal device. The following describes the method in this application.

FIG. 6 is a schematic flowchart of a communication method according to this application. Currently, a maximum of three time domain resources (that is, n=3) may be configured for a control resource set for a terminal device. However, because a bandwidth capability of a narrowband terminal device is small, even if three symbols are configured for a control resource set for the narrowband terminal device, a maximum aggregation level, of a PDCCH, that is supported by the control resource set for the narrowband terminal device is 2 or 3. To improve the aggregation level of the PDCCH for the narrowband terminal device, in this application, a limitation on a quantity of time domain resources in the control resource set for the narrowband terminal device is overcome, to be specific, the time domain resources are not constrained by three symbols. Therefore, a quantity of CCEs included in the control resource set for the narrowband terminal device can be increased by increasing the quantity of time domain resources in the control resource set for the narrowband terminal device, to improve the aggregation level of the downlink control channel in the control resource set for the narrowband terminal device. Further, in this application, the control resource set for the narrowband terminal device is divided into groups in time domain, so that a subset of the control resource set for the narrowband terminal device complies with a limitation on a quantity of time domain resources in a control resource set for a broadband terminal device (to be specific, the subset includes no more than three symbols), to facilitate resource sharing between the narrowband terminal device and the broadband terminal device. In addition, a numbering mode in the subset of the control resource set for the narrowband terminal device is the same as an encoding mode in the control resource set for the broadband terminal device, to further facilitate the resource sharing between the narrowband terminal device and the broadband terminal device.

The method includes the following steps.

S601: A network device sends a first downlink control channel in a first control resource set. Correspondingly, a first terminal device monitors the first downlink control channel in the first control resource set.

The following separately describes the first control resource set from a perspective of time domain and a perspective of frequency domain.

First, the first control resource set is described from the perspective of time domain:
The first control resource set occupies N symbols in time domain, where N is an integer greater than n. n is a maximum quantity of configurable symbols in a second control resource set, in other words, a quantity of symbols occupied by the second control resource set is less than or equal to n. For example, if a maximum of three symbols may be configured for the second control resource set, n is equal to 3. Correspondingly, N is an integer greater than 3.

The first control resource set may correspond to a first-type terminal device. The second control resource set may correspond to a second-type terminal device. To be specific, more time domain resources may be configured for a control resource set for a narrowband terminal device, so that the narrowband terminal device can receive a PDCCH with a high aggregation level, to improve communication performance.

Specifically, in this application, a quantity of time domain resources in the first control resource set is increased to increase a quantity of CCEs included in the first control resource set, thereby improving an aggregation level of the downlink control channel in the first control resource set. For example, it is assumed that n=3, and the first control resource set occupies six RBs in terms of frequency domain resources, that is, M=6. If N is less than or equal to 3, a highest CCE aggregation level supported by the first control resource set is 2 or 3. In this application, N is greater than 3. For example, N=6. In this case, the highest CCE aggregation level supported by the first control resource set is 6. It can be learned that, according to the method provided in this application, the aggregation level of the downlink control channel in the first control resource set can be improved.

Next, the first control resource set is described from the perspective of frequency domain. It should be noted that the following feature is optional: A quantity M of frequency domain resources (for example, a quantity of RBs) in the first control resource set is less than or equal to a preset value M0.

In a possible implementation, M0 may be a quantity of frequency domain resources in the second control resource set. For example, M0 may be equal to 48, 24, 20, 15, or 12. Therefore, the foregoing example description may also be described as: The quantity of frequency domain resources in the first control resource set is less than the quantity of frequency domain resources in the second control resource set. Alternatively, the foregoing example description may be understood as: The first control resource set is the control resource set corresponding to the narrowband terminal device, the second control resource set is the control resource set corresponding to the broadband terminal device, and the quantity of frequency domain resources in (or a bandwidth of) the first control resource set may be less than the quantity of frequency domain resources in (or a bandwidth of) the second control resource set because the bandwidth capability of the narrowband terminal device is less than a bandwidth capability of the broadband terminal device.

The foregoing describes the time-frequency resources in the first control resource set.

In an optional solution, time-frequency resources in the first control resource set and the second control resource set overlap. The first control resource set may be the control resource set corresponding to the narrowband terminal device, and the second control resource set may be the control resource set corresponding to the broadband terminal device. In a scenario in which the narrowband terminal device and the broadband terminal device are co-sited, the time-frequency resources in the control resource set corresponding to the narrowband terminal device and the control resource set corresponding to the broadband terminal device overlap, so that resource utilization can be improved, and a coverage hole can be reduced. For example, the narrowband terminal device and the broadband terminal device can dynamically share an overlapping resource. For example, when a downlink control channel for the broadband terminal device does not occupy the overlapping resource, the overlapping resource may be for a downlink control channel for the narrowband terminal device. Similarly, when the downlink control channel for the narrowband terminal device does not occupy the overlapping resource, the overlapping resource may be for the downlink control channel for the broadband terminal device. Alternatively, a downlink control channel for the narrowband terminal device and a downlink control channel for the broadband terminal device may simultaneously occupy the overlapping resource.

In a possible application scenario, the network device may send a second downlink control channel in the second control resource set, and send downlink data or receive uplink data based on the second downlink control channel. This scenario may be understood as a scenario in which a communication system further includes the broadband terminal device, or may be understood as the scenario in which the narrowband terminal device and the broadband terminal device are co-sited.

The following describes a structure of the first control resource set.

In a possible manner, the N symbols include K subsets, and a quantity of symbols included in a first subset in the K subsets is less than or equal to n, where K is an integer greater than 0 and less than or equal to N. In a specific implementation, quantities of symbols in the K subsets are all less than or equal to n. For example, n=3. A quantity of symbols in each subset may be 1, 2, or 3. Quantities of symbols in any two subsets may be the same or may be different. In this manner, the control resource set for the narrowband terminal device is divided into groups in time domain, so that a quantity of time domain resources in each subset is less than or equal to a total quantity of time domain resources for the broadband terminal device, to facilitate the dynamic sharing of the overlapping time-frequency resource between the broadband terminal device and the narrowband terminal device.

In an example, numbers of resource element groups corresponding to the K subsets satisfy the following rule: Resource element groups corresponding to one subset are first numbered in ascending order of time domain symbol indexes and then in ascending order of resource block indexes; and the resource element groups corresponding to the K subsets are numbered in ascending order of subset indexes. REGs in different subsets are consecutively numbered.

This may also be understood as: Resource element groups in each subset are first numbered in ascending order of time domain symbol indexes, and then numbered in ascending order of resource block indexes. It should be noted that start numbers in the subsets are different. A start number in a 1^{st} subset is 0, and a start number in each of remaining subsets is a number next to a last number in a previous subset.

In this application, numbering is separately performed in each subset of the first control resource set, and a numbering mode in each subset is the same as a numbering mode in the second control resource set. The numbering mode in the second control resource set may be the numbering mode in the foregoing term description V. To be specific, resource element groups in the second control resource set are first numbered in ascending order of time domain symbol indexes, and then numbered in ascending order of resource block indexes.

The following describes a numbering mode in the first control resource set with reference to examples.

Example 1: The K subsets occupy a same quantity of symbols.

As shown in FIG. 7, in an example in FIG. 7, it is assumed that N=8, M=6, and K=4. To be specific, the first control resource set occupies eight symbols in time domain that are respectively a symbol 1 to a symbol 8, and occupies six RBs in frequency domain that are respectively an RB 1 to an RB 6, the eight symbols are divided into four subsets that are respectively a subset 0 to a subset 3, and each subset occupies two symbols.

Resource element groups in each subset are first numbered in ascending order of time domain symbol indexes, and then numbered in ascending order of resource block indexes. It should be noted that start numbers in the subsets are different. A start number in the subset 0 is 0, and a start number in each of the subsets 1 to 3 is a number next to a last number in a previous subset.

For example, the subset 0 includes the RB 1 to the RB 6 in frequency domain, and includes the symbol 1 and the symbol 2 in time domain. In the subset 0, a number of a CCE corresponding to the RB 1 and the symbol 1 is 0, a number of a CCE corresponding to the RB 1 and the symbol 2 is 1, a number of a CCE corresponding to the RB 2 and the symbol 1 is 2, and a number of a CCE corresponding to the RB 2 and the symbol 2 is 3. The rest can be deduced by analogy. A number of a CCE corresponding to the RB 6 and the symbol 1 is 10, and a number of a CCE corresponding to the RB 6 and the symbol 2 is 11.

The subset 1 includes the RB 1 to the RB 6 in frequency domain, and includes the symbol 3 and the symbol 4 in time domain. In the subset 1, a number of a CCE corresponding to the RB 1 and the symbol 3 is 12, a number of a CCE corresponding to the RB 1 and the symbol 4 is 13, a number of a CCE corresponding to the RB 2 and the symbol 3 is 14, and a number of a CCE corresponding to the RB 2 and the symbol 4 is 15. The rest can be deduced by analogy. A number of a CCE corresponding to the RB 6 and the symbol 3 is 22, and a number of a CCE corresponding to the RB 6 and the symbol 4 is 23.

The subset 2 includes the RB 1 to the RB 6 in frequency domain, and includes the symbol 5 and the symbol 6 in time domain. In the subset 2, a number of a CCE corresponding to the RB 1 and the symbol 5 is 24, a number of a CCE corresponding to the RB 1 and the symbol 6 is 25, a number of a CCE corresponding to the RB 2 and the symbol 5 is 26, and a number of a CCE corresponding to the RB 2 and the symbol 6 is 27. The rest can be deduced by analogy. A number of a CCE corresponding to the RB 6 and the symbol 5 is 34, and a number of a CCE corresponding to the RB 6 and the symbol 6 is 35.

The subset 3 includes the RB 1 to the RB 6 in frequency domain, and includes the symbol 7 and the symbol 8 in time domain. In the subset 3, a number of a CCE corresponding to the RB 1 and the symbol 7 is 36, a number of a CCE corresponding to the RB 1 and the symbol 8 is 37, a number of a CCE corresponding to the RB 2 and the symbol 7 is 38, and a number of a CCE corresponding to the RB 2 and the symbol 8 is 39. The rest can be deduced by analogy. A number of a CCE corresponding to the RB 6 and the symbol 7 is 46, and a number of a CCE corresponding to the RB 6 and the symbol 8 is 47.

Example 2: At least two subsets in the K subsets occupy different quantities of symbols.

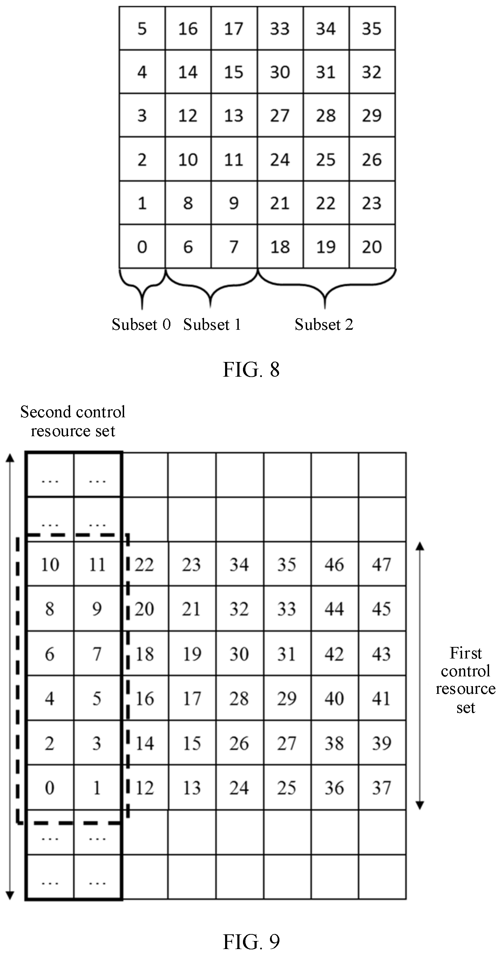

As shown in FIG. 8, in an example in FIG. 8, it is assumed that N=6, M=6, and K=3. To be specific, the first control resource set occupies six symbols in time domain that are respectively a symbol 1 to a symbol 6, and occupies six RBs in frequency domain that are respectively an RB 1 to an RB 6, and the six symbols are divided into three subsets that are respectively a subset 0 to a subset 2, where the subset 0 includes the symbol 1, the subset 1 includes the symbol 2 and the symbol 3, and the subset 2 includes the symbol 4, the symbol 5, and the symbol 6.

Resource element groups in each subset are first numbered in ascending order of time domain symbol indexes, and then numbered in ascending order of resource block indexes. It should be noted that start numbers in the subsets are different. A start number in the subset 0 is 0, and a start number in each of the subsets 1 to 3 is a number next to a last number in a previous subset.

For example, in the subset 0, a number of a CCE corresponding to the RB 1 and the symbol 1 is 0, a number of a CCE corresponding to the RB 2 and the symbol 1 is 1, a number of a CCE corresponding to the RB 3 and the symbol 1 is 2, and a number of a CCE corresponding to the RB 4 and the symbol 1 is 3. The rest can be deduced by analogy. A number of a CCE corresponding to the RB 6 and the symbol 1 is 5.

In the subset 1, a number of a CCE corresponding to the RB 1 and the symbol 2 is 6, a number of a CCE corresponding to the RB 1 and the symbol 3 is 7, a number of a CCE corresponding to the RB 2 and the symbol 2 is 8, and a number of a CCE corresponding to the RB 2 and the symbol 3 is 9. The rest can be deduced by analogy. A number of a CCE corresponding to the RB 6 and the symbol 2 is 16, and a number of a CCE corresponding to the RB 6 and the symbol 3 is 17.

In the subset 2, a number of a CCE corresponding to the RB 1 and the symbol 4 is 18, a number of a CCE corresponding to the RB 1 and the symbol 5 is 19, a number of a CCE corresponding to the RB 1 and the symbol 6 is 20, and a number of a CCE corresponding to the RB 2 and the symbol 4 is 21. The rest can be deduced by analogy. A number of a CCE corresponding to the RB 6 and the symbol 4 is 33, a number of a CCE corresponding to the RB 6 and the symbol 5 is 34, and a number of a CCE corresponding to the RB 6 and the symbol 6 is 35.

In the foregoing example 1, the maximum aggregation level supported by the downlink control channel in the first control resource set (namely, the downlink control channel for the narrowband terminal device) may be 8. In the foregoing example 2, the maximum aggregation level supported by the downlink control channel in the first control resource set (namely, the downlink control channel for the narrowband terminal device) may be 6. Compared with a coverage capability corresponding to the aggregation level being 2 or 3, coverage capabilities in the two examples are significantly improved.

In addition, encoding is performed in each subset in an order of time domain first and then frequency domain, so that a numbering mode in each subset is the same as the numbering mode in the control resource set in the foregoing term description V (namely, the numbering mode in the control resource set for the broadband terminal device, and also the numbering mode in the second control resource set in this application). Therefore, when the second control resource set (namely, the control resource set for the broadband terminal device) occupies two symbols in time domain, if a subset (for example, any subset in the example 1 or the subset 1 in the example 2) of the first control resource set (namely, the control resource set for the narrowband terminal device) overlaps the second control resource set, as shown in a region defined by dashed lines in FIG. 9, the narrowband terminal device and the broadband terminal device can dynamically share overlapping resources because the numbering mode in the subset of the first control resource set is the same as the numbering mode in the second control resource set. For example, when the downlink control channel in the second control resource set does not occupy the overlapping resources, the overlapping resources may be for the downlink control channel for the narrowband terminal device. Similarly, when the downlink control channel in the first control resource set does not occupy the overlapping resources, the overlapping resources may be for the downlink control channel for the broadband terminal device. Alternatively, when aggregation levels of the downlink control channel in the first control resource set and the downlink control channel in the second control resource set are both 1, the overlapping resources may be occupied by the downlink control channels for both the narrowband terminal device and the broadband terminal device, so that resource fragmentation can be reduced, the coverage hole can be reduced, and the resource utilization can be improved.

A manner of configuring the first control resource set is described below.

S602: The first terminal device receives downlink data or sends uplink data based on the downlink control channel. Correspondingly, the network device sends the downlink data or receives the uplink data based on the first downlink control channel.

In this application, the quantity of time domain resources in the first control resource set is increased to increase the quantity of CCEs included in the first control resource set, so that the aggregation level of the downlink control channel in the first control resource set can be improved.

The following describes the manner of configuring the first control resource set.

Optionally, the first control resource set may be configured by the network device. The following describes three manners in which the network device configures the first control resource set.

Manner 1: The network device sends first information to the first terminal device, where the first information indicates the quantity N of symbols occupied by the first control resource set and the quantity K of subsets, or the first information indicates the quantities, of symbols, that respectively correspond to the K subsets. Optionally, the first information may further indicate the frequency domain resources in the first control resource set, for example, positions and the quantity of the frequency domain resources.

Manner 2: The network device sends second information to the first terminal device, where the second information may be for configuring the first control resource set and the second control resource set.

In a possible example, if the first control resource set is for carrying scheduling information for a common message, and the scheduling information is, for example, for scheduling a system information block 1 (system information block 1, SIB1), a paging message, or a random access response, the second information may be carried in a master information block (master information block, MIB).

In a possible application scenario, when the first-type terminal device (namely, the narrowband terminal device) and the second-type terminal device (namely, the broadband terminal device) implement access via one network device, the first control resource set corresponding to the narrowband terminal device and the second control resource set corresponding to the broadband terminal device may be configured by using the same MIB.

For example, the second information may indicate the quantity of symbols occupied by the second control resource set and a quantity of resource blocks RBs occupied by the second control resource set, and the first terminal device may determine the first control resource set based on the second information.

For example, the first terminal device may determine the quantities of symbols in the K subsets based on the quantity of symbols occupied by the second control resource set. For example, the quantities of symbols in the K subsets are equal to the quantity of symbols occupied by the second control resource set. For example, assuming that the quantity of symbols occupied by the second control resource set is 2, the quantity of symbols in each subset of the first control resource set is 2.

The first terminal device may further determine the quantity K of subsets based on the quantity *N*2 of RBs occupied by the first control resource set and the quantity *N*1 of RBs occupied by the second control resource set. The quantity *N*2 of RBs occupied by the first control resource set may be an agreed value (for example, a value defined in a protocol), or may be configured by the network device. In an example, the frequency domain resources in the first control resource set may be first *N*2 RBs in the second control resource set that are sorted in ascending order of RB indexes.

For example, the quantity K of subsets may satisfy: $K = \left⌊\frac{N 1}{N 2}\right⌋$, or $K = \left⌈\frac{N 1}{N 2}\right⌉$, where *N*1 is the quantity of RBs occupied by the second control resource set, *N*2 is the quantity of RBs occupied by the first control resource set, └ ┘ represents a floor function, and ┌ ┐ represents a ceiling function.

In the foregoing manner, both the first control resource set and the second control resource set are configured by using one piece of information, so that information overheads can be reduced, and reliability of information transmission performance can be improved. For example, when the second information is the MIB, because the MIB is an important message for obtaining a system parameter, overheads for the MIB need to be controlled within a specific range, to ensure reliable transmission of the MIB. In the foregoing manner, the overheads for the MIB may not be increased, so that reliability of transmission performance of the MIB can be ensured.

Manner 3: The network device sends third information to the first terminal device, where the third information includes a first bitmap, the first bitmap is associated with a quantity P of symbols, and the first bitmap indicates a time domain position of a subset whose quantity of symbols is P in the K subsets.

For example, n is equal to 3. In this case, possible quantities of symbols in the K subsets of the first control resource set are 1, 2, or 3. Therefore, the third information may include three bitmaps. A bitmap is associated with one symbol, and the bitmap indicates a time domain position of a subset whose quantity of symbols is 1 in the K subsets. A bitmap is associated with two symbols, and the bitmap indicates a time domain position of a subset whose quantity of symbols is 2 in the K subsets. A bitmap is associated with three symbols, and the bitmap indicates a time domain position of a subset whose quantity of symbols is 3 in the K subsets. The symbols occupied by the first control resource set may be a union set of the symbol positions determined by using the three bitmaps.

In a possible implementation, a bit whose value is a first value in the first bitmap indicates a position of a symbol included in the subset whose quantity of symbols is P.

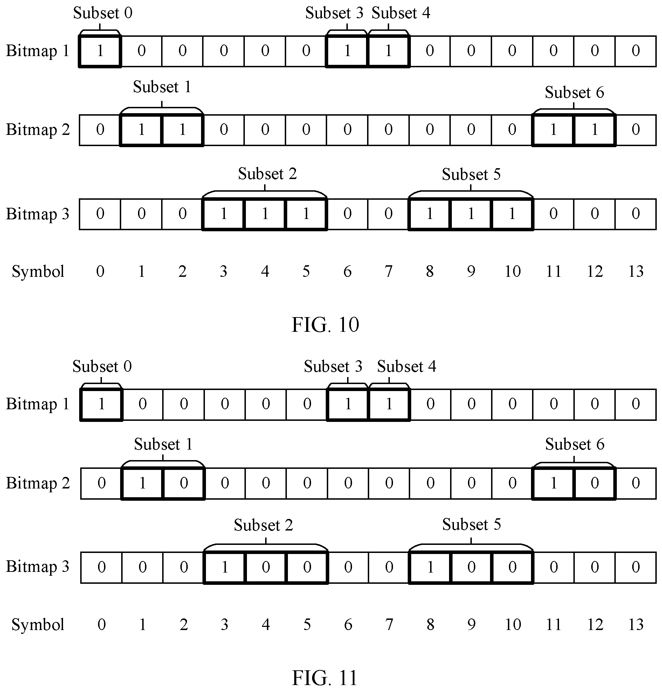

For example, as shown in FIG. 10, using the foregoing three bitmaps as an example, the bitmap 1 may be 10000011000000, the bitmap 2 may be 01100000000110, and the bitmap 3 is 00011100111000. It may be determined, based on the three bitmaps, that a symbol 0 belongs to a subset 0, and a quantity of symbols in the subset 0 is 1; a symbol 1 and a symbol 2 belong to a subset 1, and a quantity of symbols in the subset 0 is 2; a symbol 3, a symbol 4, and a symbol 5 belong to a subset 2, and a quantity of symbols in the subset 2 is 3; a symbol 6 belongs to a subset 3, and a quantity of symbols in the subset 3 is 1; a symbol 7 belongs to a subset 4, and a quantity of symbols in the subset 4 is 1; a symbol 8, a symbol 9, and a symbol 10 belong to a subset 5, and a quantity of symbols in the subset 5 is 3; and a symbol 11 and a symbol 12 belong to a subset 6, and a quantity of symbols in the subset 6 is 2. Symbols determined by using the three bitmaps are the symbol 0 to the symbol 12. In other words, the first control resource set includes the symbol 0 to the symbol 12.

In another possible implementation, a bit whose value is a first value in the first bitmap indicates a position of a 1^{st} symbol in the subset whose quantity of symbols is P.

For example, as shown in FIG. 11, using the foregoing three bitmaps as an example, the bitmap 1 may be 10000011000000, the bitmap 2 may be 01000000000100, and the bitmap 3 is 00010000100000. It may be determined, based on the three bitmaps, that a symbol 0 belongs to a subset 0, and a quantity of symbols in the subset 0 is 1; a symbol 1 and a symbol 2 belong to a subset 1, and a quantity of symbols in the subset 0 is 2; a symbol 3, a symbol 4, and a symbol 5 belong to a subset 2, and a quantity of symbols in the subset 2 is 3; a symbol 6 belongs to a subset 3, and a quantity of symbols in the subset 3 is 1; a symbol 7 belongs to a subset 4, and a quantity of symbols in the subset 4 is 1; a symbol 8, a symbol 9, and a symbol 10 belong to a subset 5, and a quantity of symbols in the subset 5 is 3; and a symbol 11 and a symbol 12 belong to a subset 6, and a quantity of symbols in the subset 6 is 2. Symbols determined by using the three bitmaps are the symbol 0 to the symbol 12. In other words, the first control resource set includes the symbol 0 to the symbol 12.

For example, a quantity of bits in the first bitmap is equal to a quantity of symbols included in one slot.

In a possible design, during configuration of the three bitmaps, locations of bits that are set to the first value may not overlap as much as possible.

Optionally, when the K subsets include different quantities of symbols, a CCE-to-REG mapping mode may be non-interleaved.

In this application, the quantity of time domain resources in the first control resource set is increased to increase the quantity of CCEs included in the first control resource set, so that the aggregation level of the downlink control channel in the first control resource set can be improved.

In addition, encoding is performed in each subset in the order of time domain first and then frequency domain, so that the numbering mode in each subset is the same as the numbering mode in the control resource set in the foregoing term description V (for example, the numbering mode in the second resource set). Therefore, when the second control resource set occupies two symbols in time domain, if a subset (for example, any subset in the example 1 or the subset 1 in the example 2) of the first control resource set overlaps the second control resource set, the first control resource set and the second control resource set can dynamically share the overlapping resource because the numbering mode in the subset of the first control resource set is the same as the numbering mode of the second control resource set, so that the resource fragmentation can be reduced, and the resource utilization can be improved.

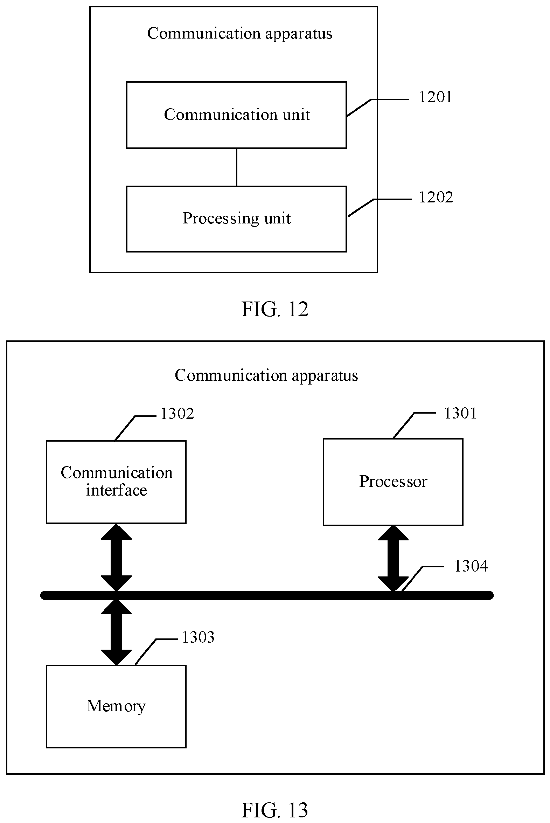

Based on a same inventive concept as the method embodiments, an embodiment of this application provides a communication apparatus. A structure of the communication apparatus may be shown in FIG. 12, and includes a communication unit 1201 and a processing unit 1202.

In an implementation, the communication apparatus may be specifically configured to implement the method performed by the terminal device in the embodiment in FIG. 6. The apparatus may be the terminal device, or may be a chip or a chip set in the terminal device or a part of the chip that is configured to perform a related method function. The processing unit 1202 is configured to: monitor a downlink control channel in a first control resource set by using the communication unit 1201; and receive downlink data or send uplink data by using the communication unit 1201 based on the downlink control channel. The first control resource set occupies N symbols in time domain, where N is an integer greater than 3.

Optionally, the communication unit 1201 is further configured to receive first information, where the first information indicates the quantity N of symbols occupied by the first control resource set and a quantity K of subsets, or the first information indicates quantities, of symbols, that respectively correspond to K subsets.

Optionally, the communication unit 1201 is further configured to receive second information, where the second information indicates a quantity of symbols occupied by a second control resource set and a quantity of RBs occupied by the second control resource set, where quantities of symbols in K subsets are determined based on the quantity of symbols occupied by the second control resource set, and the quantity K of subsets is determined based on a quantity of RBs occupied by the first control resource set and the quantity of RBs occupied by the second control resource set.

Optionally, the communication unit 1201 is further configured to receive third information, where the third information includes a first bitmap, the first bitmap is associated with a quantity P of symbols, and the first bitmap indicates a time domain position of a subset whose quantity of symbols is P in K subsets.

In an implementation, the communication apparatus may be specifically configured to implement the method performed by the network device in the embodiment in FIG. 6. The apparatus may be the network device, or may be a chip or a chip set in the network device or a part of the chip that is configured to perform a related method function. The processing unit 1202 is configured to: send a first downlink control channel in a first control resource set by using the communication unit 1201; and send downlink data or receive uplink data by using the communication unit 1201 based on the first downlink control channel, where the first control resource set occupies N symbols in time domain, where N is an integer greater than 3.

Optionally, the communication unit 1201 is further configured to send first information, where the first information indicates the quantity N of symbols occupied by the first control resource set and a quantity K of subsets, or the first information indicates quantities, of symbols, that respectively correspond to K subsets.

Optionally, the communication unit 1201 is further configured to send second information, where the second information indicates a quantity of symbols occupied by a second control resource set and a quantity of RBs occupied by the second control resource set, where quantities of symbols in K subsets are determined based on the quantity of symbols occupied by the second control resource set, and the quantity K of subsets is determined based on a quantity of RBs occupied by the first control resource set and the quantity of RBs occupied by the second control resource set.

Optionally, the communication unit 1201 is further configured to send third information, where the third information includes a first bitmap, the first bitmap is associated with a quantity P of symbols, and the first bitmap indicates a time domain position of a subset whose quantity of symbols is P in the K subsets.

Optionally, the communication unit 1201 is further configured to: send a second downlink control channel in the second control resource set; and send downlink data or receive uplink data based on the second downlink control channel, where the quantity of symbols in the second control resource set is less than or equal to 3, and time-frequency resources in the first control resource set and the second control resource set overlap.

Division into the modules in embodiments of this application is an example, is merely logical function division, and may be other division during actual implementation. In addition, the functional modules in embodiments of this application may be integrated into one processor, each of the functional modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiments.

In a possible manner, the communication apparatus may be shown in FIG. 13. The apparatus may be a communication device or a chip in the communication device. The communication device may be the terminal device in the foregoing embodiments or the network device in the foregoing embodiments. The apparatus includes a processor 1301 and a communication interface 1302, and may further include a memory 1303. The processing unit 1202 may be the processor 1301. The communication unit 1201 may be the communication interface 1302. Optionally, the processor 1301 and the memory 1303 may alternatively be integrated together.

The processor 1301 may be a CPU, a digital processing unit, or the like. The communication interface 1302 may be a transceiver, an interface circuit such as a transceiver circuit, a transceiver chip, or the like. The apparatus further includes the memory 1303, configured to store a program executed by the processor 1301. The memory 1303 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory 1303 is any other medium that can be used to carry or store expected program code in a form of an instruction structure or a data structure and that can be accessed by a computer, but is not limited thereto.

The processor 1301 is configured to execute the program code stored in the memory 1303, and is specifically configured to perform an action of the processing unit 1202. Details are not described herein again in this application. The communication interface 1302 is specifically configured to perform an action of the communication unit 1201. Details are not described herein again in this application.

A specific connection medium between the communication interface 1302, the processor 1301, and the memory 1303 is not limited in this embodiment of this application. In this embodiment of this application, in FIG. 13, the memory 1303, the processor 1301, and the communication interface 1302 are connected by using a bus 1304. The bus is represented by a thick line in FIG. 13. A connection manner between other components is merely an example for description, and imposes no limitation. Buses may be classified into an address bus, a data bus, a control bus, and the like. For ease of representation, only one bold line is used for representation in FIG. 13, but this does not mean that there is only one bus or only one type of bus.

An embodiment of the present invention further provides a computer-readable storage medium, configured to store computer software instructions that need to be executed for execution of the foregoing processor, and the computer software instructions include a program that needs to be executed for the execution of the foregoing processor.

An embodiment of this application further provides a communication system, including a communication apparatus configured to implement a function of the terminal device in the embodiment in FIG. 6 and a communication apparatus configured to implement a function of the network device in the embodiment in FIG. 6.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope defined by the claims of this application and their equivalent technologies.

## Claims

1. A communication method, wherein the method comprises:
monitoring a downlink control channel in a first control resource set; and
receiving downlink data or sending uplink data based on the downlink control channel, wherein
the first control resource set occupies N symbols in time domain, wherein N is an integer greater than 3.

2. The method according to claim 1, wherein the N symbols comprise K subsets, and a quantity of symbols comprised in a first subset in the K subsets is less than or equal to 3, wherein K is an integer greater than 0 and less than or equal to N.

3. The method according to claim 2, wherein numbers of resource element groups corresponding to the K subsets satisfy the following rule:
resource element groups corresponding to one subset are first numbered in ascending order of time domain symbol indexes and then in ascending order of resource block indexes; and
the resource element groups corresponding to the K subsets are numbered in ascending order of subset indexes.

4. The method according to claim 2 or 3, wherein the method further comprises:
receiving first information, wherein the first information indicates the quantity N of symbols occupied by the first control resource set and the quantity K of subsets, or the first information indicates quantities, of symbols, that respectively correspond to the K subsets.

5. The method according to claim 2 or 3, wherein the method further comprises:
receiving second information, wherein the second information indicates a quantity of symbols occupied by a second control resource set and a quantity of resource blocks RBs occupied by the second control resource set, wherein
quantities of symbols in the K subsets are determined based on the quantity of symbols occupied by the second control resource set, and the quantity K of subsets is determined based on a quantity of RBs occupied by the first control resource set and the quantity of RBs occupied by the second control resource set.

6. The method according to claim 5, wherein the quantities of symbols in the K subsets are equal to the quantity of symbols occupied by the second control resource set.

7. The method according to claim 5 or 6, wherein the quantity K of $subsets = \left⌊\frac{N 1}{N 2}\right⌋$, or $K = \left⌈\frac{N 1}{N 2}\right⌉$, wherein *N*1 is the quantity of RBs occupied by the second control resource set, *N*2 is the quantity of RBs occupied by the first control resource set, └ ┘ represents a floor function, and ┌ ┐ represents a ceiling function.

8. The method according to claim 2 or 3, wherein the method further comprises:
receiving third information, wherein the third information comprises a first bitmap, the first bitmap is associated with a quantity P of symbols, and the first bitmap indicates a time domain position of a subset whose quantity of symbols is P in the K subsets.

9. The method according to claim 8, wherein a bit whose value is a first value in the first bitmap indicates a position of a symbol comprised in the subset whose quantity of symbols is P; or
a bit whose value is a first value in the first bitmap indicates a position of a 1^{st} symbol in the subset whose quantity of symbols is P.

10. The method according to claim 8 or 9, wherein a quantity of bits in the first bitmap is equal to a quantity of symbols comprised in one slot.

11. The method according to any one of claims 1 to 10, wherein a quantity of frequency domain resources in the first control resource set is less than or equal to a preset value.

12. The method according to any one of claims 1 to 11, wherein time-frequency resources in the first control resource set and the second control resource set overlap, and the quantity of symbols in the second control resource set is less than or equal to 3.

13. The method according to any one of claims 1 to 12, wherein the first control resource set corresponds to a first-type terminal device, and a maximum bandwidth capability of the first-type terminal device is less than a maximum bandwidth capability of a second-type terminal device, or a maximum bandwidth capability of the first-type terminal device is less than or equal to a preset value.

14. A communication method, wherein the method comprises:
sending a first downlink control channel in a first control resource set; and
sending downlink data or receiving uplink data based on the first downlink control channel, wherein
the first control resource set occupies N symbols in time domain, wherein N is an integer greater than 3.

15. The method according to claim 14, wherein the N symbols comprise K subsets, and a quantity of symbols comprised in a first subset in the K subsets is less than or equal to 3, wherein K is an integer greater than 0 and less than or equal to N.

16. The method according to claim 15, wherein numbers of resource element groups corresponding to the K subsets satisfy the following rule:
resource element groups corresponding to one subset are first numbered in ascending order of time domain symbol indexes and then in ascending order of resource block indexes; and
the resource element groups corresponding to the K subsets are numbered in ascending order of subset indexes.

17. The method according to claim 15 or 16, wherein the method further comprises:
sending first information, wherein the first information indicates the quantity N of symbols occupied by the first control resource set and the quantity K of subsets, or the first information indicates quantities, of symbols, that respectively correspond to the K subsets.

18. The method according to claim 15 or 16, wherein the method further comprises:
sending second information, wherein the second information indicates a quantity of symbols occupied by a second control resource set and a quantity of resource blocks RBs occupied by the second control resource set, wherein
quantities of symbols in the K subsets are determined based on the quantity of symbols occupied by the second control resource set, and the quantity K of subsets is determined based on a quantity of RBs occupied by the first control resource set and the quantity of RBs occupied by the second control resource set.

19. The method according to claim 18, wherein the quantities of symbols in the K subsets are equal to the quantity of symbols occupied by the second control resource set.

20. The method according to claim 18 or 19, wherein the quantity K of $subsets = \left⌊\frac{N 1}{N 2}\right⌋$, or $K = \left⌈\frac{N 1}{N 2}\right⌉$, wherein *N*1 is the quantity of RBs occupied by the second control resource set, *N*2 is the quantity of RBs occupied by the first control resource set, └ ┘ represents a floor function, and ┌ ┐ represents a ceiling function.

21. The method according to claim 15 or 16, wherein the method further comprises:
sending third information, wherein the third information comprises a first bitmap, the first bitmap is associated with a quantity P of symbols, and the first bitmap indicates a time domain position of a subset whose quantity of symbols is P in the K subsets.

22. The method according to claim 21, wherein a bit whose value is a first value in the first bitmap indicates a position of a symbol comprised in the subset whose quantity of symbols is P; or
a bit whose value is a first value in the first bitmap indicates a position of a 1^{st} symbol in the subset whose quantity of symbols is P.

23. The method according to claim 21 or 22, wherein a quantity of bits in the 1^{st} bitmap is equal to a quantity of symbols comprised in one slot.

24. The method according to any one of claims 14 to 23, wherein a quantity of frequency domain resources in the first control resource set is less than or equal to a preset value.

25. The method according to any one of claims 14 to 24, wherein the method further comprises:
sending a second downlink control channel in a second control resource set; and
sending downlink data or receiving uplink data based on the second downlink control channel, wherein
the quantity of symbols in the second control resource set is less than or equal to 3, and time-frequency resources in the first control resource set and the second control resource set overlap.

26. The method according to any one of claims 14 to 25, wherein the first control resource set corresponds to a first-type terminal device, and a maximum bandwidth capability of the first-type terminal device is less than a maximum bandwidth capability of a second-type terminal device, or a maximum bandwidth capability of the first-type terminal device is less than or equal to a preset value.

27. A communication apparatus, comprising a processor and a memory, wherein the memory is configured to store program instructions; and when the processor executes the program instructions, the method according to any one of claims 1 to 13 is performed.

28. A communication apparatus, comprising a processor and a memory, wherein the memory is configured to store program instructions; and when the processor executes the program instructions, the method according to any one of claims 14 to 26 is performed.

29. A communication apparatus, comprising a unit or a module configured to perform the method according to any one of claims 1 to 13.

30. A communication apparatus, comprising a unit or a module configured to perform the method according to any one of claims 14 to 26.

31. A computer-readable storage medium, wherein the computer storage medium stores computer-readable instructions; and when the computer-readable instructions are run on a communication apparatus, the method according to any one of claims 1 to 13 is performed, or the method according to any one of claims 14 to 26 is performed.

32. A computer program product, wherein when the computer program product runs on a device, the device is caused to perform the method according to any one of claims 1 to 13 or the method according to any one of claims 14 to 26.
